# EUROPÄISCHE PATENTSCHRIFT

(11) **EP 0 832 807 B1**
(45) Veröffentlichungstag und Bekanntmachung des Hinweises auf die Patenterteilung: **02.05.2002**
(21) Anmeldenummer: 97116348.0
(22) Anmeldetag: 19.09.1997
(51) Int. Cl.: B62D 1/12, B62D 1/22, B64C 13/00, B64C 13/02, B64C 13/04, B64C 13/50

(54) **Verfahren zur Auswahl eines von mehreren gleichwirkenden Bedienelementen zur Steuerung der Längs- und/oder Querdynamik eines Fahrzeuges, insbesondere eines Kraftfahrzeuges**
Method for selecting one of several equivalent operating control elements for controlling the longitudinal and/or lateral dynamics of a vehicle, in particular a motor vehicle
Méthode pour sélectionner l'un de plusieurs éléments de commande d'opération équivalente pour le contrôle des dynamiques transversales et/ou longitudinales d'un véhicule, notamment d'un véhicule à moteur

(30) Priorität: 27.09.1996 DE 19639849
(43) Veröffentlichungstag der Anmeldung: 01.04.1998
(73) Patentinhaber: DaimlerChrysler AG, 70567 Stuttgart (DE)
(72) Erfinder: Haller, Uwe, 75239 Eisingen (DE); Leschke, Harald, 71067 Sindelfingen (DE)

(56) Entgegenhaltungen:
- EP-A- 0 634 302

## Beschreibung

Die Erfindung betrifft ein Verfahren zur Auswahl eines von mehreren gleichwirkenden Bedienelementen zur Steuerung der Längs- und/oder Querdynamik eines Fahrzeuges, insbesondere eines Kraftfahrzeuges nach dem Oberbegriff des Patentanspruches 1, wie es beispielsweise aus der EP 0 634 302 A1 hervorgeht.

Die EP 0 634 302 A1 betrifft ein Fahrzeug mit zwei Lenk- und Bedieneinrichtungen, die verschiedenen Sitzen im Fahrzeug zugeordnet sind. Mit Hilfe eines Umschaltelementes kann wechselweise eine der beiden Lenk- und Bedieneinrichtungen aktiviert werden.

Des weiteren sind aus der DE 195 48 717.6 verschiedene Konfigurationen von Bedienelementen zur Steuerung der Längs- und/oder Querdynamik eines Kraftfahrzeuges bekannt. Dabei können mehrere vom Fahrersitz aus bewegbare Bedienelemente vorgesehen sein. Ferner können des weiteren sowohl Bedienelemente vorgesehen sein, die vom Fahrersitz und vom Beifahrersitz aus bewegbar sind, als auch Bedienelemente, die lediglich vom Beifahrersitz aus bewegbar sind.

Um eines der Bedienelemente auszuwählen und dadurch die Steuerung der Längs- und/oder Querdynamik des Fahrzeugs mittels dieses Bedienelementes vorzunehmen, ist in der DE 195 48 717.6 vorgesehen, daß die Betätigungselemente entweder untereinander betätigungsgekoppelt, in ihren Signalen additiv überlagernd ausgebildet, untereinander hierarchisch gestuft oder manuell umschaltbar sind.

Erfolgt ein Deaktivieren eines Bedienelementes und die Aktivierung eines anderen Bedienelementes zur Steuerung der Längs- und/oder Querbewegung eines Fahrzeuges, so ist im Zeitpunkt der Umschaltung kurzzeitig unklar welches Bedienelement nun gerade aktiv ist. Wird während einer Fahrt von der Bedienung des Fahrers auf den Beifahrer (oder umgekehrt) umgeschaltet, so bedarf dies einer genauen Absprache zwischen Beiden. Es entsteht zwangsläufig ein kurzer Zeitraum, in dem der Fahrer der Ansicht ist, der Beifahrer habe die Steuerung des Fahrzeugs durch ein ihm zugeordnetes Bedienelement schon übernommen, während der Beifahrer noch der Ansicht ist, der Fahrer führe die Steuerung des Fahrzeugs noch durch.

Im übrigen ist bei der manuellen Umschaltung ein Irrtum über das manuell ausgewählten Bedienelement möglich. Kommt ein solcher Irrtum vor, so wird der Fahrer zunächst die Bedienung über das von ihm vermeintlich ausgewählte Bedienelement versuchen. Eine gefährliche Fahrsituation entsteht, da das Fahrzeug nicht über das Bedienelement steuerbar ist. Bis der Fahrer das tatsächlich aktivierte Bedienelement herausfindet vergeht ein Zeitraum, während dem Unfälle nicht ausgeschlossen werden können.

Des weiteren ist es aus der WO 88/09279 bekannt, zwei Bedienelemente zur Steuerung der Querbewegung, die vom Fahrer jeweils mit einer Hand bedient werden können, vorzusehen. Die beiden Bedienelemente sind dabei untereinander mechanisch starr gekoppelt.

Aufgabe der Erfindung ist es, eine unbeabsichtigte Steuerung der Längs- und/oder Querdynamik des Kraftfahrzeugs zu verhindern und eine manuelle Umschaltung zwischen verschiedenen Bedienelementen übergangszeitlos und für die Beteiligten auch während der Fahrt gefahrlos durchführbar zu gestalten.

Diese Aufgabe wird bei gattungsgemäßen zugrundegelegten Bedienelementen erfindungsgemäß mit den kennzeichnenden Merkmalen des Anspruchs 1 gelöst, wobei die Merkmale der Unteransprüche vorteilhafte Aus- und Weiterbildungen kennzeichnen.

Die Erfindung hat den Vorteil, daß die Aktivierung des ausgewählten Bedienelementes gleichzeitig mit dem Deaktivieren des vorigen Bedienelementes dann erfolgt, wenn das ausgewählte Bedienelement betätigt wird, nachdem über einen Wahlschalter die Aktivierung des ausgewählten Bedienelementes ermöglicht wird.

Das vorteilhafte erfindungsgemäße Verfahren erfolgt also in zwei Schritten, wobei durch die Betätigung des Wahlschalters zunächst ein Aktivieren eines Bedienelementes ermöglicht wird. Die tatsächliche Aktivierung erfolgt zu einem späteren Zeitpunkt, nämlich dann, wenn das zu aktivierende Bedienelement zur Steuerung der Längs- und/oder Querbewegung des Fahrzeugs tatsächlich betätigt wird.

Gemäß einer vorteilhaften Ausgestaltung der Erfindung wird durch Überprüfen der Sitzbelegung sichergestellt, daß lediglich die Bedienelemente betätigt werden können, die einem Bedienplatz zugeordnet sind, der tatsächlich besetzt ist. So ist es zum Beispiel ausgeschlossen, ein lediglich vom Beifahrersitz aus betätigbares Bedienelement zu aktivieren, wenn der Beifahrersitz nicht besetzt ist. Dadurch werden in vorteilhafter Weise Fehlbedienungen ausgeschlossen.

Gemäß einer weiteren vorteilhaften Ausgestaltung muß das ausgewählte Bedienelement innerhalb eines vorgegebenen Zeitintervalls, das beispielsweise bis zu 30 Sekunden betragen kann, betätigt werden, damit die Auswahl tatsächlich vollzogen wird. Dies hat den Vorteil, daß ein unbeabsichtigtes Betätigen des Wahlschalters nicht zu einem weit späteren Zeitpunkt durch ein ebenfalls unbeabsichtigtes Betätigen des Bedienelementes zu einer nicht beabsichtigten Aktivierung eines Bedienelementes führt. Durch die zeitliche Korrelation wird also der Wille des/der Beteiligten festgestellt, tatsächlich einen Umschaltvorgang vorzunehmen. Die Dauer des vorgegebenen Zeitintervalls bedarf der Abstimmung, sie kann beispielsweise durch Fahrversuche in einem entsprechend ausgerüsteten Simulator erfolgen.

Weitere zweckmäßige Ausgestaltungen der Erfindung können den Unteransprüchen entnommen werden; im übrigen ist die Erfindung an Hand eines in der Zeichnung dargestellten Ausführungsbeispieles nachfolgend noch erläutert; dabei zeigen:
- Fig. 1: eine Anordnung von Bedienelementen und
- Fig. 2: das Flußdiagramm eines erfindungsgemäßen Verfahrens.

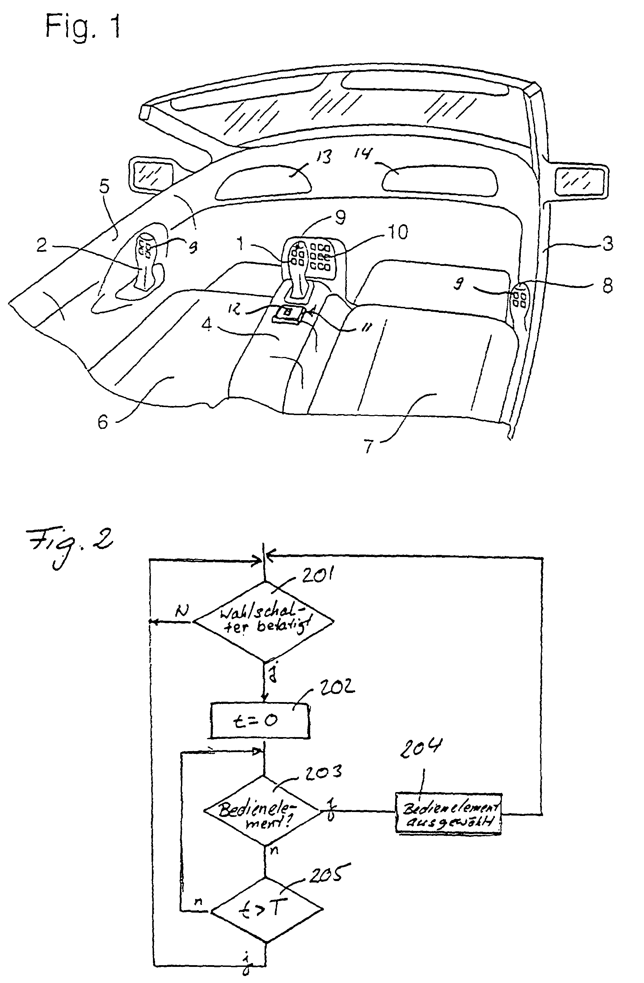

Die Fig. 1 zeigt die Anordnung von drei Bedienelementen 1, 2, 8 zur Steuerung der Längs- und/oder Querdynamik eines Kraftfahrzeugs. Jedes dieser Bedienelemente kann unabhängig von den anderen Bedienelementen betätigt werden, wobei über mit den Bedienelementen verbundene Steller die gewünschte Steuerung der Längs- und/oder Querdynamik des Fahrzeugs vorgenommen werden kann.

Das Bedienelement 1 ist dabei auf dem Mitteltunnel 4 zwischen dem Fahrersitz 6 und dem Beifahrersitz 7 angeordnet und daher sowohl vom Fahrer als auch vom Beifahrer betätigbar. Das Bedienelement 2 im Bereich der Fahrertüre 5 ist nur vom Fahrer erreichbar angeordnet. Das Bedienelement 8 im Bereich der Beifahrertüre 3 ist lediglich vom Beifahrer betätigbar.

Ferner sind an den Bedienelementen 1, 2, 8 noch Betätigungsmittel 9 angeordnet, mit denen unterschiedliche Funktionen, beispielsweise die Blinker des Fahrzeugs betätigt werden können. Die Betätigungsmittel 10 sind im Bereich des Mitteltunnels 4 angeordnet, so daß sie sowohl vom Fahrer als auch vom Beifahrer aus betätigbar sind.

Das Fahrzeug weist im übrigen zwei Anzeigemittel 13 und 14 auf, die dem Fahrer bzw. dem Beifahrer zugeordnet sind und die alle Fahrinformationen, wie Fahrzeuggeschwindigkeit, Öldruck, Kühlwassertemperatur, etc. (Kombiinstrument) anzeigen können. Ist zu einem Zeitpunkt das Bedienelement 2 des Fahrers aktiviert, so ist es nicht notwendig, daß das Anzeigemittel 14 des Beifahrers die Fahrinformationen anzeigt. Das Anzeigemittel 14 kann dann zu beliebigen anderen Zwecken genutzt werden, beispielsweise als Fernsehschirm. Erst mit der Umschaltung auf das Bedienelement 9 oder 8 muß die Fahrinformation an dem Anzeigemittel 14 wiedergegeben werden. Entsprechendes gilt für das Anzeigemittel 13, wenn das Fahrzeug nicht vom Fahrersitz 6 aus bedient werden kann.

Der Wahlschalter 11 zum Auswählen eines Bedienelementes weist einen Schaltknopf 12 auf, der sich selbsttätig in seine dargestellte Ruhestellung zurückbewegt. Der Schaltknopf 12 des Wahlschalters 11 kann aus der Ruhestellung sowohl nach Links als auch nach Rechts verschoben werden. Dadurch wird die Auswahl eines entsprechenden Bedienelementes ermöglicht.

Wird bei stehendem Motor des Fahrzeugs der Wahlschalter 11 betätigt, so wird zunächst der Motor gestartet und ein vorgegebenes Bedienelement, beispielsweise das Bedienelement 2 aktiviert. Die Aktivierung des Bedienelementes 2 erfolgt jedoch lediglich dann, wenn der Fahrersitz 6 zu diesem Zeitpunkt belegt ist. Ist er nicht belegt und gleichzeitig der Beifahrersitz 7 belegt, so kann das Bedienelement 8 aktiviert werden. Möchte der Fahrer oder Beifahrer ein anderes Bedienelement als das vorbestimmte wählen, so muß er wie in Fig. 2 beschrieben, ein anderes Bedienelement wählen. Ist keiner der beiden Sitze 6, 7 besetzt so kann kein Anlassen erfolgen, die Bedienfunktionen der Bedienelemente 1, 2 und 8 sind gesperrt, also alle Bedienelemente deaktiviert.

Gemäß des in der Fig. 2 dargestellten Verfahrens wird im Schritt. 201 überprüft, ob der Wahlschalter betätigt ist. Ist dies nicht der Fall, so wird zum Schritt 201 zurückgesprungen.

Das Betätigen des Wahlschalters erfolgt beispielsweise durch Verschieben des Schaltknopfes 12 nach Links oder nach Rechts. Wird der Wahlschalter nach Links verschoben, so ist das Links vom derzeit aktiven Bedienelement angeordnete Bedienelement auswählbar. Ist beispielsweise zunächst das Bedienelement 1 ausgewählt, so wird durch Verschieben des Schaltknopfes 12 nach Links die Auswahl des Bedienelementes 2 ermöglicht. Ein Verschieben des Schaltknopfes 12 nach Rechts würde in dieser Situation das Auswählen des Bedienelementes 8 ermöglichen.

Ist anfangs das Bedienelement 2 ausgewählt, so wird durch Betätigen des Schaltknopfes 12 nach Rechts das Auswählen des Bedienelementes 1 möglich. Bei einem Betätigen des Schaltknopfes 12 nach Links kann entweder kein anderes Bedienelement ausgewählt werden, oder es kann im Sinne einer fiktiven zyklischen Anordnung der Bedienelemente das Bedienelement 8 ausgewählt werden. Entsprechendes gilt wenn Anfangs das Bedienelement 8 ausgewählt ist.

Wird im Schritt 201 festgestellt, daß der Schaltknopf 12 des Wahlschalters 11 betätigt ist, so wird gemäß dem Schritt 202 der Zeitzähler t auf Null zurückgesetzt. Anschließend wird im Schritt 203 überprüft, ob das Bedienelement, dessen Auswahl ermöglicht ist, betätigt wird. Eine Betätigung kann dabei entweder dann vorliegen, wenn eine Lageveränderung des Bedienelementes vorgenommen, ein Betätigungsmittel 9 am entsprechenden Bedienelement betätigt oder wenn mittels eines geeigneten Sensors das Umgreifen des entsprechenden Bedienelementes durch den Fahrer bzw. Beifahrer festgestellt wird.

Wird im Schritt 203 erkannt, daß eine Betätigung des ausgewählten Bedienelementes erfolgt ist, so wird gemäß dem Schritt 204 die Auswahl vollzogen. Gleichzeitig ist das vorher ausgewählte Bedienelement nicht mehr aktiv, das heißt, einer Lageänderung hat keinen Steuervorgang des Fahrzeugs mehr zur Folge.

Andernfalls wird gemäß dem Schritt 205 überprüft, ob das Zeitin-tervall T seit dem Zurücksetzen des Zeitzählers t überschritten wurde. Solange dies nicht der Fall ist, wird zum Schritt 203 zurückgesprungen. Andernfalls wird zum Schritt 201 gesprungen, ein Auswählen eines Bedienelementes ohne vorheriges Betätigen des Schaltknopfes 12 ist dann nicht mehr möglich.

## Patentansprüche

1. Verfahren zur Auswahl eines von mehreren gleichwirkenden Bedienelementen zur Steuerung der Längs- und/oder Querdynamik eines Fahrzeuges, insbesondere eines Kraftfahrzeuges,
wobei die Bedienelemente unabhängig voneinander bewegbar sind, und wobei die Auswahl eines Bedienelementes (1, 2 bzw. 8) durch Betätigen eines Wahlschalters (11) ermöglicht wird,
**dadurch gekennzeichnet,**
**daß** die Aktivierung des anhand des Wahlschalters (11) ausgewählten Bedienelements (1, 2 bzw. 8) durch die nachfolgende Betätigung des ausgewählten Bedienelementes (1, 2 bzw. 8) vollzogen wird und
**daß** bis zum Vollzug der Aktivierung des ausgewählten Bedienelement (1, 2 bzw. 8) durch eine Betätigung, das derzeit aktive Bedienelement (1, 2 bzw. 8) weiterhin aktiviert ist.

2. Verfahren nach Anspruch 1,
**dadurch gekennzeichnet,**
**daß** dann, wenn ein Bedienelement (2 bzw. 8) einem bestimmten Bedienplatz (6 bzw. 7) zugeordnet ist, die Auswahl dieses Bedienelementes (2 bzw. 8) lediglich dann möglich ist, wenn der zugeordnete Bedienplatz (6 bzw. 7) besetzt ist.

3. Verfahren nach Anspruch 1,
**dadurch gekennzeichnet,**
**daß** zur Auswahl eines Bedienelementes (1, 2 bzw. 8) dessen Betätigung innerhalb eines vorgegebenen Zeitintervalls (T) nach der Betätigung des Wahlschalters (11) erfolgen muß.

4. Verfahren nach Anspruch 1,
**dadurch gekennzeichnet,**
**daß** der Wahlschalter (11) einen selbsttätig rückstellenden Schaltknopf (12) aufweist, wobei eine Betätigung des Schaltknopfes (12) in der Richtung vom derzeit ausgewählten Bedienelement (1, 2 bzw. 8) auf ein anderes Bedienelement (1, 2 bzw. 8) die Auswahl des anderen Bedienelementes (1, 2 bzw. 8) ermöglicht.

5. Verfahren nach Anspruch 1,
**dadurch gekennzeichnet,**
**daß** ein Betätigen des Wahlschalters (11) bei ausgeschaltetem Fahrzeugmotor ein Anlassen des Fahrzeugmotors bewirkt.

6. Verfahren nach Anspruch 5,
**dadurch gekennzeichnet,**
**daß** nach dem Anlassen des Fahrzeugmotors ein vorgegebenes Bedienelement (1, 2 bzw. 8) aktiviert ist, sofern der Bedienplatz (6 bzw. 7) dem dieses vorgegebene Bedienelement (1, 2 bzw. 8) zugeordnet ist, besetzt ist.

7. Verfahren nach Anspruch 1,
**dadurch gekennzeichnet,**
**daß** das Betätigen des ausgewählten Bedienelementes (1, 2 bzw. 8) durch Veränderung seiner Lage festgestellt wird.

8. Verfahren nach Anspruch 1,
**dadurch gekennzeichnet,**
**daß** jeweils mittels eines Sensors das Umgreifen des Bedienelementes (1, 2 bzw. 8) erfaßt wird, und daß ein Betätigen des ausgewählten Bedienelementes (1, 2 bzw. 8) dann als erfolgt gilt, wenn das Umgreifen des ausgewählten Bedienelementes (1, 2 bzw. 8) festgestellt wird.

9. Verfahren nach Anspruch 1 oder 2,
**dadurch gekennzeichnet,**
**daß** gleichzeitig mit der Auswahl eines einem anderen als dem derzeitigen Bedienplatz (6 bzw. 7) zugeordneten Bedienelementes (1, 2 bzw. 8) weitere mehrfach vorhandende Betätigungs- (9) und/oder Anzeigemittel (13, 14) am derzeitigen Bedienplatz (6 bzw. 7) deaktiviert und am dem ausgewählten Bedienelement (1, 2 bzw. 8) zugeordneten Bedienplatz aktiviert werden.

## Claims

1. A process for selecting one of several equally acting operating controls to control the longitudinal and/or transverse dynamics of a vehicle, in particular a motor vehicle,
it being possible to move the operating controls independently of one another and the selection of an operating control (1, 2, or 8) being made possible by the actuation of a selector switch (11),
**characterised in that**
the activation of the operating control (1, 2 or 8) selected using the selector switch (11) is completed by the subsequent actuation of the selected operating control (1, 2 or 8) and
that the currently active operating control (1, 2 or 8) remains activated until completion of the activation of the selected operating control (1, 2 or 8) by its actuation.

2. A process in accordance with Claim 1,
**characterised in that**
when an operating control (2 or 8) is assigned to a given operating station (6 or 7), this operating control (2 or 8) can then be sleeted only if the assigned operating station (6 or 7) is occupied.

3. A process in accordance with Claim 1,
**characterised in that**
in order to select an operating control (1, 2 or 8) it must be actuated within a predetermined period of time (T) after the actuation of the selector switch (11).

4. A process in accordance with Claim 1,
**characterised in that**
the selector switch (11) has a self-resetting push button (12), actuation of the push button (12) from the currently selected operating control (1,2 or 8) towards another operating control (1, 2 or 8) permitting the selection of the other operating control (1, 2 or 8).

5. A process in accordance with Claim 1,
**characterised in that**
actuation of the selector switch (11) when the vehicle engine is switched off starts the vehicle engine.

6. A process in accordance with Claim 5,
**characterised in that**
once the vehicle engine has started, a predetermined operating control (1,2 or 8) is activated in so far as the operating station (6 or 7) to which this predetermined operating control (1, 2 or 8) is assigned is occupied.

7. A process in accordance with Claim 1,
**characterised in that**
the actuation of the selected operating control (1, 2 or 8) is identified by means of a change in its position.

8. A process in accordance with Claim 1,
**characterised in that**
the grasping of the control (1, 2 or 8) is detected by means of a sensor, and that the selected operating control (1, 2 or 8) is deemed to have been actuated when the grasping of the selected operating control (1, 2 or 8) is determined.

9. A process in accordance with Claim 1 or 2,
**characterised in that**
at the same time as the selection of an operating control (1, 2 or 8) assigned to any other than the current operating station (6 or 7), several other actuators (9) and/or indicators (13, 14) are deactivated at the current operating station (6 or 7) and activated at the operating station assigned to the selected operating control (1, 2 or 8).

## Revendications

1. Procédé permettant la sélection d'un élément de commande parmi plusieurs éléments de commande à action équivalente, pour commander la dynamique longitudinale et/ou transversale d'un véhicule, en particulier d'un véhicule automobile,
où les éléments de commande sont mobiles indépendamment les uns des autres et où la sélection d'un élément de commande (1, 2 ou 8) est rendue possible en actionnant un commutateur sélecteur (11),
**caractérisé**
**en ce que** l'activation de l'élément de commande (1, 2 ou 8) sélectionné à l'aide du commutateur sélecteur (11) est exécutée par l'actionnement, qui suit, de l'élément de commande (1, 2 ou 8) sélectionné, et
**en ce que** l'élément de commande (1, 2 ou 8) actuellement actif est encore activé jusqu'à l'exécution de l'activation, par un actionnement, de l'élément de commande (1, 2 ou 8) sélectionné.

2. Procédé selon la revendication 1, **caractérisé en ce qu'**ensuite, lorsqu'un élément de commande (2 ou 8) est associé à un emplacement de commande déterminé (6 ou 7), la sélection de cet élément de commande (2 ou 8) n'est alors possible que lorsque l'emplacement de commande associé (6 ou 7) est occupé.

3. Procédé selon la revendication 1, **caractérisé en ce que**, pour réaliser la sélection d'un élément de commande (1, 2 ou 8), son actionnement doit s'effectuer à l'intérieur d'un intervalle de temps (T) prédéterminé, après l'actionnement du commutateur sélecteur (11).

4. Procédé selon la revendication 1, **caractérisé en ce que** le commutateur sélecteur (11) comprend un bouton de commande (12) revenant automatiquement en position initiale, où un actionnement du bouton de commande (12) dans la direction de l'élément de commande (1, 2 ou 8) actuellement sélectionné, sur un autre élément de commande (1, 2 ou 8), permet la sélection de l'autre élément de commande (1, 2 ou 8).

5. Procédé selon la revendication 1, **caractérisé en ce qu'**un actionnement du commutateur sélecteur (11), lorsque le moteur du véhicule est arrêté, déclenche un démarrage du moteur du véhicule.

6. Procédé selon la revendication 5, **caractérisé en ce que**, après le démarrage du moteur du véhicule, un élément de commande prédéterminé (1, 2 ou 8) est activé dans la mesure où l'emplacement de commande (6 ou 7), auquel cet élément de commande prédéterminé (1, 2 ou 8) est associé, est occupé.

7. Procédé selon la revendication 1, **caractérisé en ce que** l'actionnement de l'élément de commande sélectionné (1, 2 ou 8) est constaté par la modification de sa position.

8. Procédé selon la revendication 1, **caractérisé en ce que** la prise en main de l'élément de commande (1, 2 ou 8) est détectée à chaque fois au moyen d'un capteur et **en ce qu'**un actionnement de l'élément de commande sélectionné (1, 2 ou 8) est considéré alors comme effectué lorsque la prise en main de l'élément de commande sélectionné (1, 2 ou 8) est constatée.

9. Procédé selon la revendication 1 ou 2, **caractérisé en ce que**, en même temps que la sélection d'un élément de commande (1, 2 ou 8) associé à un emplacement de commande (6 ou 7) autre que l'emplacement de commande actuel, d'autres moyens d'actionnement (9) et/ou d'autres moyens indicateurs (13, 14), plusieurs fois présents, sont désactivés au niveau de l'emplacement de commande actuel (6 ou 7) et activés au niveau de l'emplacement de commande associé à l'élément de commande sélectionné (1, 2 ou 8).
